# EUROPEAN PATENT APPLICATION

(11) **EP 2 953 346 A1**
(43) Date of publication of application: **09.12.2015**
(21) Application number: 15170264.4
(22) Date of filing: 02.06.2015
(51) Int. Cl.: H04N 5/225

(54) **LIGHT FIELD IMAGING**

(30) Priority: 02.06.2014 IN CH27012014
(71) Applicant: Nokia Corporation, 02610 Espoo (FI)
(72) Inventor: Govindarao, Krishna Annasagar, 560 050 Bangalore, Karnataka State (IN); Putraya, Gururaj Gopal, 560 103 Bangalore, Karnataka State (IN); Shenoy, Ravi, 560098 Bangalore, Karnataka State (IN); Uliyar, Mithun, 560061 Bangalore, Karnataka State (IN)
(74) Representative: Swindell & Pearson Limited

(57) **Abstract**

An apparatus comprising a first optical element, a second optical element and an image sensor. The first optical element is configured to focus light with first wavelengths on the second optical element, and the second optical element is transparent to light with second wavelengths and configured to relay an image containing lightfield information on the image sensor from light with the first wavelengths.

## Description

### TECHNICAL FIELD

The present application generally relates to light field imaging.

### BACKGROUND

In a digital camera, light rays fall on an image sensor through the optics of the camera. The image sensor detects and records the intensity of light rays incident on each pixel of the image sensor. From the intensity data, an image or a photograph is created. As the image sensor records the intensity of all the light rays incident on each pixel, the direction of the light rays is not taken into account. The camera produces an image, the focus of which is dependent on the optical settings at the time of exposure.

In light field photography, also called plenoptic imaging, the intensity and direction of each incident light ray is recorded, and with the information on the four dimensional light field it is feasible to create each possible image in the field of view of the camera, e.g. the focus of an image can be adjusted after the exposure.

Light field photography has been realized for example with camera arrangements comprising a mask or an array of lenslets between the lens of the camera and the imaging sensor. Such arrangements often reduce the resolution of the image from that of the image sensor.

The recent success and growth of digital and mobile imaging calls for simple solutions for light field imaging which do not sacrifice the quality of the image, do not require tedious hardware modifications nor disturb the comfortable user experience of digital and mobile imaging. Accordingly, a solution enabling the capture of a full resolution conventional image simultaneously or instead of a light field image without any inconvenience to the user is desired.

### SUMMARY

Various aspects of examples of the invention are set out in the claims.

According to a first example aspect of the invention, there is provided an apparatus, comprising:
a first optical element;
a second optical element; and
an image sensor; wherein
the first optical element is configured to focus light with first wavelengths on the second optical element, and wherein
the second optical element is transparent to light with second wavelengths and configured to relay an image containing lightfield information on the image sensor from light with the first wavelengths.

The first optical element may comprise a lens configured to focus light with the first wavelengths on the second optical element and light with second wavelengths on the image sensor.

The first optical element may further comprise a mask having a first region configured to allow only the light with the first wavelengths to pass and a second region configured to allow only the light with second wavelengths to pass.

The lens may further be configured to focus light with second wavelengths on the image sensor.

The second optical element may comprise a mask configured to allow the light with the first wavelengths to pass only through certain regions.

The mask may comprise a pinhole mask configured to allow the light with the first wavelengths to pass only through the pinholes.

According to a second example aspect of the invention, there is provided an electronic device, comprising:
a housing;
a display;
a memory;
a processor; and
a camera unit comprising an image sensor and optics; wherein
the processor is configured to cause the image sensor to record an image comprising light field information from light with first wavelengths relayed on the sensor by a second optical element, and
the processor is configured to cause the image sensor to record a conventional image from light with second wavelengths.

The processor may further be configured to cause forming final images by processing the conventional image and or the image containing light field information.

According to a third example aspect of the invention, there is provided a system, comprising the apparatus of the first example aspect and the electronic device of the second example aspect.

According to a fourth example aspect of the invention, there is provided a method, comprising
focusing with a first optical element light with first wavelengths on a second optical element;
relaying with the second optical element light with the first wavelengths on an image sensor, wherein the second optical element is transparent to light with second wavelengths;
recording an image comprising light field information from the light with first wavelengths;
recording a conventional image from the light with second wavelengths; and
processing the conventional image and or the image containing light field information to form final images.

The method may further comprise focusing with the first optical element the light with second wavelengths on the image sensor.

The processing may comprise upscaling and/or deblurring.

According to a seventh example aspect of the invention, there is provided a computer program, comprising code for performing a method of an example aspect of the invention, when the computer program is run on a processor.

According to an eighth example aspect of the invention, there is provided a memory medium comprising the computer program of the third example aspect of the invention.

Different non-binding example aspects and example embodiments of the present invention have been illustrated in the foregoing. The foregoing example embodiments are used merely to explain selected aspects or steps that may be utilized in implementations of the present invention. Some example embodiments may be presented only with reference to certain example aspects of the invention. It should be appreciated that corresponding example embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic system for use as a reference with which some example embodiments can be explained;
Fig. 2 shows a block diagram of an apparatus of an example embodiment;
Fig. 3 shows a block diagram of a camera unit of an example embodiment;
Fig. 4a shows a schematic representation of an apparatus according to an example embodiment;
Fig. 4b shows a schematic representation of an apparatus according to an example embodiment;
Fig. 5 shows a schematic representation of an apparatus according to an example embodiment;
Fig. 6 shows a schematic representation of an apparatus according to an example embodiment; and
Fig. 7 shows a flow diagram of a method of an example embodiment.

### DETAILED DESCRIPTON OF THE DRAWINGS

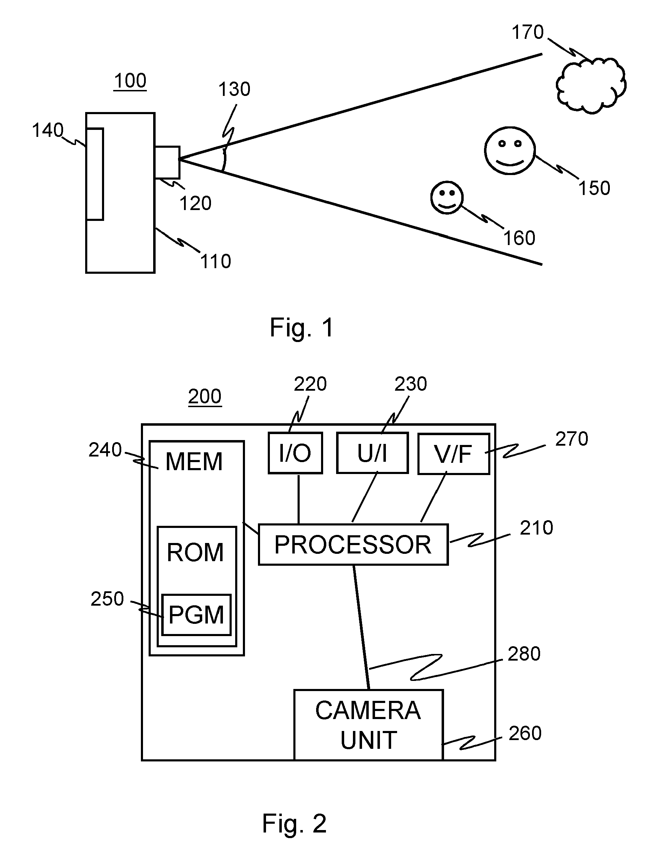

Fig. 1 shows a schematic system 100 for use as a reference with which some example embodiments can be explained. The system 100 comprises an electronic device 110 such as a camera phone, camera, smartphone, gaming device, personal digital assistant or a tablet computer having a camera unit 120 that is capable of capturing images of a scene with a field of view 130. The camera unit 120 is configured to capture a conventional image of a scene and/or a light field image of the same scene. The device 110 further comprises a display 140. Fig. 1 also shows image objects 150, 160 and 170 in the scene at different distances from the camera unit 120 that are being imaged by the camera unit 120.

Fig. 2 shows a block diagram of an apparatus 200 of an example embodiment. The apparatus 200 is suited for operating as the device 110. In an example embodiment, the apparatus 200 comprises a communication interface 220, a host processor 210 coupled to the communication interface 220, and a memory 240 coupled to the host processor 210.

The memory 240 comprises a work memory and a non-volatile memory such as a read-only memory, flash memory, optical or magnetic memory. In the memory 240, typically at least initially in the non-volatile memory, there is stored software 250 operable to be loaded into and executed by the host processor 210. The software 250 may comprise one or more software modules and can be in the form of a computer program product that is software stored in a memory medium. The apparatus 200 further comprises a camera unit 260 and a viewfinder 270 each coupled to the host processor 210. The camera unit 260 and the processor 210 are connected via a camera interface 280. The camera unit 260 is configured to operate as a conventional digital camera and/or as a light field photography camera. The camera unit 260 is configured to capture a conventional image of a scene and/or a light field image of the same scene.

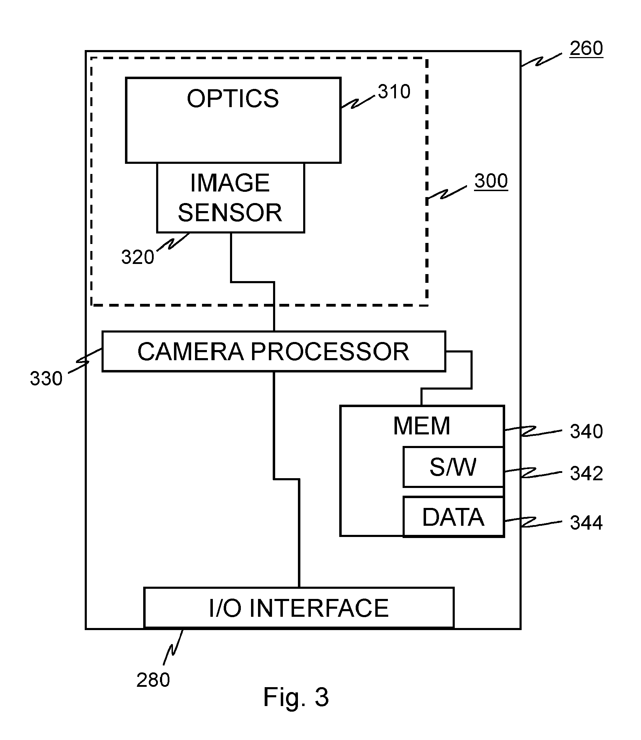

Term host processor refers to a processor in the apparatus 200 in distinction of one or more processors in the camera unit 260, referred to as camera processor(s) 330 in Fig. 3. Depending on implementation, different example embodiments share processing of image and/or light field information and control of the camera unit 260 differently between the camera unit and one or more processors outside the camera unit. Also, the processing is performed on the fly in an example embodiment and with buffering in another example embodiment. It is also possible that a given amount of images or image information can be processed on the fly and after than buffered operation mode is used as in one example embodiment.

It shall be understood that any coupling in this document refers to functional or operational coupling; there may be intervening components or circuitries in between coupled elements unless expressly otherwise described.

The communication interface 220 is configured to provide local communications over one or more local links. The links may be wired and/or wireless links. The communication interface 220 may further or alternatively implement telecommunication links suited for establishing links with other users or for data transfer, e.g. using the Internet. Such telecommunication links may be links using any of: wireless local area network links, Bluetooth, ultra-wideband, cellular or satellite communication links. The communication interface 220 may be integrated into the apparatus 200 or into an adapter, such as a card that may be inserted into a suitable slot or port of the apparatus 200. While Fig. 2 shows one communication interface 220, the apparatus may comprise a plurality of communication interfaces 220.

The host processor 210 is, for instance, a central processing unit (CPU), a microprocessor, a digital signal processor (DSP), a graphics processing unit, an application specific integrated circuit (ASIC), a field programmable gate array, a microcontroller or a combination of such elements. Figure 2 shows one host processor 210, but the apparatus 200 may comprise a plurality of host processors.

As mentioned in the foregoing, the memory 240 may comprise non-transitory non-volatile and a non-volatile memory, such as a read-only memory (ROM), a programmable read-only memory (PROM), erasable programmable read-only memory (EPROM), a random-access memory (RAM), a flash memory, a data disk, an optical storage, a magnetic storage, or a smart card. In some example embodiments, only volatile or non-volatile memory is present in the apparatus 200. Moreover, in some example embodiments, the apparatus comprises a plurality of memories. In some example embodiments, various elements are integrated. For instance, the memory 240 can be constructed as a part of the apparatus 200 or inserted into a slot or a port. Further still, the memory 240 may serve the sole purpose of storing data, or it may be constructed as a part of an apparatus serving other purposes, such as processing data. Similar options are thinkable also for various other elements.

A skilled person appreciates that in addition to the elements shown in Fig. 2, the apparatus 200 may comprise other elements, such as microphones, displays, as well as additional circuitry such as further input/output (I/O) circuitries, memory chips, application-specific integrated circuits (ASIC), processing circuitry for specific purposes such as source coding/decoding circuitry, channel coding/decoding circuitry, or ciphering/deciphering circuitry. Additionally, the apparatus 200 may comprise a housing and a disposable or rechargeable battery (not shown) for powering the apparatus if external power supply is not available.

It is also useful to realize that the term apparatus is used in this document with varying scope. In some of the broader claims and examples, the term apparatus may refer to only a subset of the features presented in Fig. 2 or even be implemented without any one of the features of Fig. 2. In an example embodiment term apparatus refers to the processor 210, an input of the processor 210 configured to receive information from the camera unit and an output of the processor 210 configured to provide information to the viewfinder. In one example embodiment, the term apparatus refers to a device that receives image information from the image sensor via a first input and produces sub-images to a second input of an image processor, which image processor is any circuitry that makes use of the produced sub-images. For instance, the image processor may comprise the processor 210 and the device in question may comprise the camera processor 330 and the camera interface 280 shown in Fig. 3.

Fig. 3 shows a block diagram of a camera unit 260 of an example embodiment. The camera unit 260 of Fig. 3 may for example be used as the camera unit 120 of Fig. 1 and/or the camera unit 260 of Fig. 2. The camera unit 260 comprises optics 310, an image sensor 320, a camera processor 330, a memory 340 comprising data 344 and software 342 with which the camera processor 330 can manage operations of the camera unit 260. The camera processor 330 operates as an image and light field information processing circuitry of an example embodiment. An input/output or camera interface 280 is also provided to enable exchange of information between the camera unit 260 and the host processor 210. Furthermore, in an example embodiment, the camera unit has a light sensitive film medium instead of an image sensor 320.

In an example embodiment, the software 342 stored in the memory comprises applications or programs or instructions for operating the camera unit for capturing conventional images and/or light field images. In an example embodiment, he data 344 stored in the memory 340 comprises parameters for use in conventional and/or light field photography.

The image sensor 320 is, for instance, a charge-coupled device (CCD) or complementary metal oxide semiconductor (CMOS) unit. In case of a CMOS unit, the image sensor 320 can also contain built-in analog-to-digital implemented on common silicon chip with the image sensor 320. In an alternative example embodiment, a separate analog-to-digital (A/D) conversion is provided between the image sensor 320 and the camera processor 330. In addition to the conventional image processing and the calculations or operations needed in light field recording, the camera processor 330 takes care in example embodiments of one or more of the following functions: pixel color interpolation; white balance correction; edge enhancement; anti-aliasing of images; vignetting correction; combining of subsequent images for high dynamic range imaging; bayer reconstruction filtering; chromatic aberration correction; dust effect compensation; image stabilization.

In an example embodiment, the apparatus 200 further comprises a user interface (U/I) 230. The user interface comprises one or more elements with which the user operates the apparatus 200 and the camera unit 260. Said elements comprise for example a shutter button, menu buttons and a touch screen. The shutter button and the menu buttons may be hardware buttons or for example buttons displayed on a touch screen.

In a further example embodiment, the apparatus 200 or the camera unit 260 comprises an image stabilizer (not shown). In an example embodiment the image stabilizer is an optical image stabilizer configured to move a lens or several lenses. Alternatively, the image stabilizer is configured to move the image sensor 320 or a mirror. In a further example embodiment the image stabilizer is implemented with a software image stabilization method. It is also possible to use more than one different image stabilizing techniques and in one example embodiment, two or more of the mentioned image stabilization techniques are combined. A skilled person appreciates that in a further example embodiment, the apparatus 200 and/or the camera unit 260 comprises further elements not shown in the image.

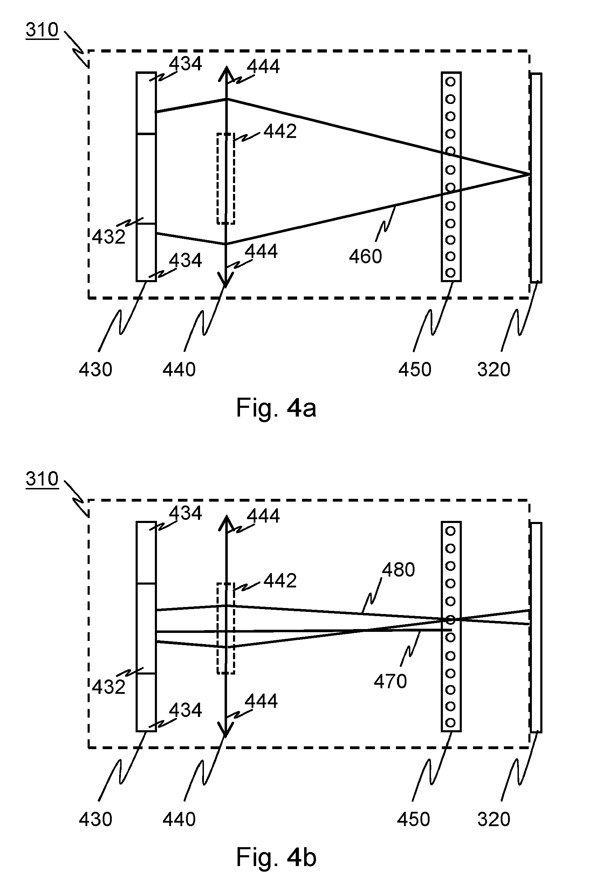

Figs. 4a and 4b show a schematic representation of an apparatus according to an example embodiment. Figs. 4a and 4b shows schematically the camera optics 310 and the image sensor 320. Figs. 4a and 4b show the elements of the optics 310 according to an embodiment of the invention comprising a main lens or first lens, 440 and a main lens mask 430, or first mask. The main lens 440 and the main lens mask 430 are configured to function together as a first optical element. The optics further comprise a second optical element 450, such as a pinhole mask. In an example embodiment, the main lens mask 430 comprises two regions 432,434. The first region 432, in an example embodiment a circular region in the middle of the main lens mask 430 is configured to allow light from a scene with first, in an example embodiment predetermined, wavelengths to pass, i.e. the region 432 functions as a band-pass filter. In an example embodiment the first wavelengths comprise wavelengths corresponding to a color component of light, for example red. The second region 434, in an example element a circular ring-formed region around the first region 432 is configured to allow light from the scene with wavelengths other than the first wavelengths, i.e. second wavelengths to pass, i.e. the region 434 functions as a band-pass filter. In an example embodiment the second wavelengths comprise wavelengths corresponding to color components of light other than the one able to pass the first region, for example blue and green.

In an example embodiment, the main lens 440 comprises two regions 442,444. The first region 442, in an example embodiment a circular region in the middle of the main lens 440 is configured to focus light 470,480 on the second optical element 450, i.e. the region 442 has a first focal length. In an example embodiment the first wavelengths comprise wavelengths corresponding to a color component of light, for example red. The second region 444, in an example element a circular ring-formed region around the first region 442 is configured to focus light 460 on the image sensor 320 i.e. the region 442 has a second focal length. Accordingly, the main lens mask 430 and the main lens 440 are configured to function as a first optical element configured to focus light from a scene with first wavelengths, such as red, on the second optical element 450 and light from the scene with second wavelengths, such as blue and green, on the image sensor 320.

The second optical element 450, such as a pinhole mask or a cosine modulated mask, is in an example embodiment configured to capture an image containing lightfield information on the image sensor 320 from the light with the first wavelengths. In an example embodiment, the second optical element 450 is on some regions, such as the pinholes, transparent for the light with the first wavelengths and on some regions opaque for the light with the first wavelengths. The second optical element 450 forms an image containing lightfield information in a conventional manner. The second optical element is in an example embodiment configured to be transparent for the light from the scene with second wavelengths. Accordingly, the image sensor receives a high-resolution, or full resolution, image of the scene on the second wavelengths, e.g. blue and green, and an image containing light field information, i.e. an image containing multiple low-resolution views of the scene, on the first wavelengths. In an example embodiment, the image containing light field information on the first wavelengths is up-scaled with the high-resolution information of the second wavelength. Accordingly, a high-resolution conventional image of the scene and a high-resolution light-field image of the scene are achieved.

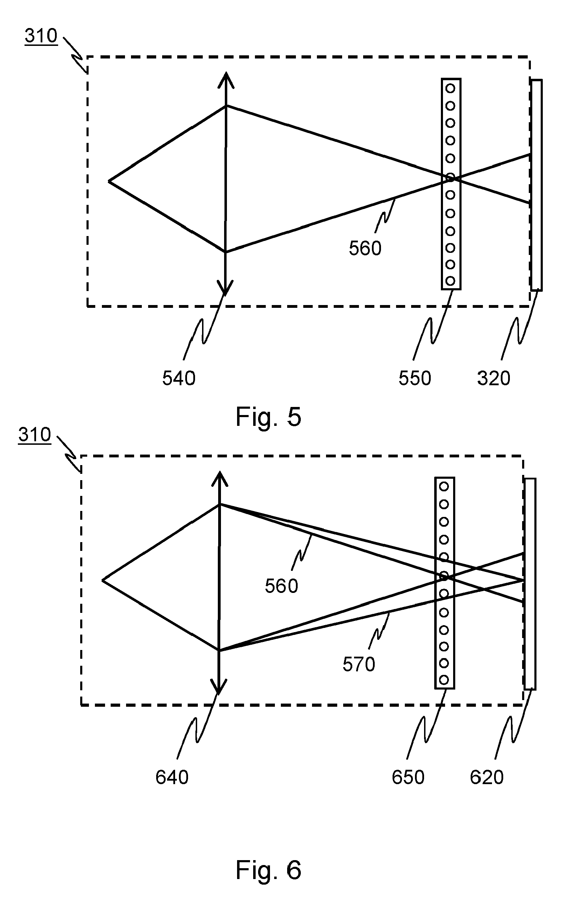

Fig. 5 shows a schematic representation of an apparatus according to an example embodiment. Fig. 5 shows schematically the camera optics 310 and the image sensor 320. Fig. 5 shows the elements of the optics 310 according to an embodiment of the invention comprising a main lens or first lens, 540 configured to function as a first optical element. The optics further comprise a second optical element 550, such as a pinhole mask. In an example embodiment, the main lens 540 is configured to focus light 560 from a scene on the second optical element 450. Accordingly, the main lens 540 is configured to function as a first optical element configured to focus light from the scene with first wavelengths, such as red, on the second optical element 550 as well as light with second wavelengths, such as blue and green, on the second optical element 550.

The second optical element 550, such as a pinhole mask or a cosine modulated mask, is in an example embodiment configured to capture an image containing lightfield information on the image sensor 320 from the light from the scene with the first wavelengths. In an example embodiment, the second optical element 550 is on some regions, such as the pinholes, transparent for the light from the scene with the first wavelengths and on some regions opaque for the light from the scene with the first wavelengths. The second optical element 550 forms an image containing lightfield information in a conventional manner. The second optical element is in an example embodiment configured to be transparent for the light from the scene with second wavelengths. Accordingly, the image sensor receives a high-resolution, or full resolution, image of the scene on the second wavelengths, e.g. blue and green and an image containing light field information, i.e. an image containing multiple low-resolution views, on the first wavelengths. However, as the main lens 540 is configured to focus light from the scene on the second optical element 550, the image of the scene on the second wavelengths is blurred and is in an embodiment deblurred in a conventional manner. In an example embodiment, the image containing light field information on the first wavelengths is up-scaled with the high-resolution information of the second wavelength. Accordingly, a high-resolution conventional image of the scene and a high-resolution light-field image of the scene achieved.

Fig. 6 shows a schematic representation of an apparatus according to an example embodiment. Fig. 6 shows schematically the camera optics 310 and the image sensor 320. Fig. 6 shows the elements of the optics 310 according to an embodiment of the invention comprising a main lens or first lens, 640 configured to function as a first optical element. The optics further comprise a second optical element 650, such as a pinhole mask. In an example embodiment, the main lens 640 is configured to focus light 560 from a scene with the first wavelength on the second optical element 650 and light from the scene with wavelength other than the first wavelength on the image sensor. In an example embodiment, the main lens is provided with an accentuated chromatic aberration in order to focus light with different wavelengths on different distances. Accordingly, the main lens 640 is configured to function as a first optical element configured to focus light with first wavelengths, such as blue, on the second optical element 650 and light with second wavelengths, such as red and green, on the second optical element 650.

The second optical element 650, such as a pinhole mask or a cosine modulated mask, is in an example embodiment configured to capture an image containing lightfield information on the image sensor 320 from the light from the scene with the first wavelengths. In an example embodiment, the second optical element 650 is on some regions, such as the pinholes, transparent for the light with the first wavelengths and on some regions opaque for the light with the first wavelengths. The second optical element 650 forms an image containing lightfield information of the scene in a conventional manner. The second optical element is in an example embodiment configured to be transparent for the light from the scene with second wavelengths. Accordingly, the image sensor receives a high-resolution, or full resolution, image of the scene on the second wavelengths, e.g. red and green and an image containing light field information, i.e. an image containing multiple low-resolution views, on the first wavelengths. However, depending on the chromatic aberration of the main lens 640 the image of the scene on the second wavelengths is in part blurred and is in an embodiment deblurred in a conventional manner. In an example embodiment, the image of the scene containing light field information on the first wavelengths is up-scaled with the high-resolution information of the second wavelength. Accordingly, a high-resolution conventional image of the scene and a high-resolution light-field image of the scene are achieved.

It is appreciated that Figs 4a to 6 illustrate the optical components as ideal components, but the depicted components, in an example embodiment, consist of several, i.e. the components comprise several elements. Furthermore, the optics 310 may comprise further elements (not shown), such as further optical components or electronic components, e.g. a processor or processors. In a further example embodiment, the elements of the optics comprise switchable optics, i.e. optical elements that are controlled by electric signals, so as to accommodate different imaging situations and save space and cost.

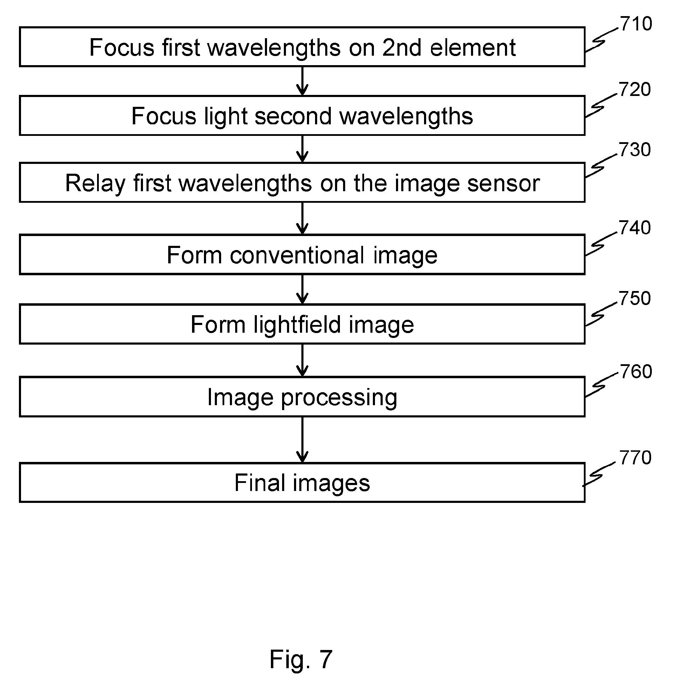

Figure 7 illustrates a flow chart of an example embodiment of a method according to an example embodiment. In an example embodiment, the steps described are caused to be carried out by a processor or processors, i.e. the processor is configured to cause carrying out the steps described. After the user of the apparatus according to an example embodiment has indicated her desire to capture an image of the scene, for example by pressing a shutter button, the first wavelengths and second wavelengths of light from the scene are focused at steps 710 and 720, which occur concurrently in an example embodiment, by the first optical element as hereinbefore described, i.e. the first wavelengths are focused on the second optical element and the second wavelengths either on the second optical element or on the image sensor. At steps 740 and 750 a conventional image of the scene and a lightfield image of the scene, i.e. an image containing lightfield information, are formed. At step 760, the images formed are processed, for example to upscale the lightfield image using the high-resolution conventional image data and/or to deblur the conventional image. A skilled person appreciates that further conventional image processing is in an embodiment carried out at step 760. At step 770, final images of the scene are ready and in an example embodiment shown to the user and/or saved.

Without in any way limiting the scope, interpretation, or application of the claims appearing below, a technical effect of one or more of the example embodiments disclosed herein is to enable both light field and conventional imaging while minimally compromising the conventional image quality. Another technical effect of one or more of the example embodiments disclosed herein is to enable light field imaging with high resolution. Another technical effect of one or more of the example embodiments disclosed herein is to enhance the user experience by providing light field information enabling vast possibilities of post processing. Still a further technical effect is to provide a simple and cost effective light field camera without need for accessories.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while example embodiments of the invention have been described hereinbefore, these descriptions should not be viewed in a limiting sense. Rather, there are several variations and modifications which may be made without departing from the scope of the present invention as defined in the appended claims.

## Claims

1. An apparatus, comprising:
a first optical element;
a second optical element; and
an image sensor; wherein
the first optical element is configured to focus light with first wavelengths on the second optical element; and wherein
the second optical element is transparent to light with second wavelengths and is configured to relay an image containing lightfield information on the image sensor from light with the first wavelengths.

2. The apparatus of claim 1, wherein the first optical element comprises a lens configured to focus light with the first wavelengths on the second optical element and light with second wavelengths on the image sensor.

3. The apparatus of claim 2, wherein the first optical element further comprises a mask having a first region configured to allow only the light with the first wavelengths to pass and a second region configured to allow only the light with second wavelengths to pass.

4. The apparatus of claim 2 or 3, wherein the lens is further configured to focus light with second wavelengths on the image sensor.

5. The apparatus of claim 1, wherein the second optical element comprises a mask configured to allow the light with the first wavelengths to pass only through certain regions.

6. The apparatus of claim 5, wherein the mask comprise a pinhole mask configured to allow the light with the first wavelengths to pass only through the pinholes.

7. A method comprising
focusing with a first optical element light with first wavelengths on a second optical element;
relaying with the second optical element light with the first wavelengths on an image sensor, wherein the second optical element is transparent to light with second wavelengths;
recording an image comprising light field information from the light with first wavelengths;
recording a conventional image from the light with second wavelengths; and
processing the conventional image and or the image containing light field information to form final images.

8. The method of claim 7, further comprising focusing with the first optical element the light with second wavelengths on the image sensor.

9. The method of claim 7 or 8, wherein processing comprises upscaling and/or deblurring.

10. An apparatus, comprising:
a first optical element configured to focus light from a scene;
an image sensor; and
a second optical element in an optical path between the first optical element and the image sensor; and
configured to simultaneously provide a plurality of smaller optical apertures for light from the scene of first wavelengths and a large optical aperture for light from the scene of second wavelengths, different to the first wavelengths.

11. An apparatus as claimed in claim 10, wherein the second optical element is transparent to light of the second wavelengths and provides a plenoptic camera aperture at the first wavelengths, the plenoptic camera aperture comprising the plurality of smaller optical apertures as an array, for example, as an array of holes or lens.

12. An apparatus as claimed in claim 10 or 11, wherein the first optical element has different focal lengths for the light of the first wavelengths and the second wavelengths.

13. A method comprising:
processing a plurality of small optical aperture images of a scene at a first time that were captured by an image sensor at first wavelengths and a large optical aperture image of the scene at the first time that was captured by the image sensor at second wavelengths, different to the first wavelengths to provide a further image of the scene.

14. A computer program, comprising:
code for performing a method of any of claims 7, 8, 9 or 13,
when the computer program is run on a processor.

15. A memory medium comprising the computer program of claim 14.
